# EUROPEAN PATENT APPLICATION

(11) **EP 3 061 636 A1**
(43) Date of publication of application: **31.08.2016**
(21) Application number: 15779592.3
(22) Date of filing: 28.01.2015
(51) Int. Cl.: B60J 5/10

(54) **TAILGATE WITH LOAD AREA EXTENDER FOR UTILITY MOTOR VEHICLE, AND MOTOR VEHICLE**

(30) Priority: 30.01.2014 BR 14002330
(71) Applicant: FCA Fiat Chrysler Automóveis Brasil Ltda., 32669-900 Betim- MG (BR)
(72) Inventor: BORGES FILHO, Aroldo Gaspar, CEP : 32669-900 Betim, MG (BR); BICALHO, Guilherme Ferreira Sette, CEP : 32669-900 Betim, MG (BR); PEREIRA, Marcelo Ferreira, CEP : 32669-900 Betim, MG (BR); FIDÊNCIO, Renato Gilliard, CEP : 32669-900 Betim, MG (BR); COSTA, Douglas De Souza, CEP : 32669-900 Betim, MG (BR)
(74) Representative: Pallini Gervasi, Diego
(86) International application number: PCT/BR2015/000009
(87) International publication number: WO 2015/157833

(57) **Abstract**

It is herein described a cargo automotive vehicle comprising a tailgate (3), which comprises two panels (3D, 3E), each one tilting in relation to an vertical axis defined by one or more hinges (9) which connect, in an articulated manner, one vehicle body (1) side part (4) to said panel (3D, 3E). Each one of said panel (3d 3E) has an extender (13) articulated with respect to said panel (3D, 3E) by at least one hinge (14), with horizontal articulation axis, said panels (3D, 3E), when tilted or downward swung, defining an extended cargo area essentially coplanar with the load area (2) floor (5) of the cargo vehicle (1).

## Description

### State of art

The present invention relates to a tailgate for an automotive lightweight vehicle intended to transport cargo. More particularly, the present invention relates to a cargo vehicle tailgate from which cargo area extenders are protruded.

In prior art are known various solutions in order to access to an automotive vehicle or lightweight vehicle cargo area, such as those known as SUVs, TRUCKS, pickup trucks and the like. In general, the access to the cargo area (either when it is opened to the environment or closed) is made by a type of tilting tailgate, wherein the pivot axis is located at the cargo area floor level. Examples of solutions using this concept can be seen in DE 4103651, US 2631880, US 7543875, US 6422567, WO 03041979 and WO 2006094497. In the mentioned solutions, the tilting tailgate must have its open position strengthened, for instance, by means of articulated arms or cables (which connect the vehicle rear columns to an intermediate position of the tailgate), so as to prevent the cargo, temporarily deposited on the tailgate, damages the door joints and limit stops. In the particular case of the solution disclosed in WO 03041979, besides the tilting tailgate, it is also described a downward swinging panel, from said tailgate, and intended to constitute a rear closing to avoid cargo from falling down outside the vehicle.

This solution, by one hand, allows the vehicle owner to, optionally, makes use of a larger cargo area, but, on the other hand, it unnecessarily limits and makes difficult to access to said cargo area. More specifically, when the tailgate is open, the distance between the cargo area front portion (the portion nearest to the driver's seat) and the utmost rear end of the vehicle (which, with the tailgate open, is defined by the upper edge of the tailgate, and that goes beyond the rear limit defined by the vehicle bumper) is greatly enlarged.

As a result, the user is required to handle and secure the cargo from positions other than the vehicle rear. For smaller trucks (e.g. for cargo up to 500-600 kg), to access to the cargo area by the side of the vehicle may be simple and easy, due to the low height of the side parts which delimit the cargo area. However, for larger trucks and pick-up trucks, which usually have higher side walls as well as a greater distance between the chassis bottom and the ground, such lateral access may not be possible. Likewise, SUVs or vans also do not allow lateral access to the cargo area, whereby the user is limited to enter the passenger compartment or in the cargo area itself.

In addition, the articulated arms, which interconnect the vehicle rear columns to the tailgate, increase the possibility of damaging the mechanism. In particular, the transfer of higher bulk loading can lead it to an eventual shock with one of the articulated arms, thus damaging it and immediately affecting the tailgate capacity of supporting the cargo disposed on it.

Another way, known in the art, to enhance the cargo area of a commercial vehicle is described, for example, in US 2784027, US 3132755 and JP 2006168691. In these solutions, the vehicle cargo area is enhanced from an element which protrudes beyond the cargo area and, in the case of US solutions, it is disposed within said cargo area and, in the case of Japanese solution, it is attached to the vehicle rear portion, but provided to facilitate the access to the cargo area.

In spite of the above solutions eliminate accessing and handling problems of the volume to be loaded / unloaded on the vehicle (since the loading area is only extended when needed) said solutions face serious problems in supporting the floor extended beyond the vehicle cargo compartment.

### Field of the invention

It is a first object of the present invention a tailgate for cargo vehicles, the type with two single panels, such as rear tilting tailgates with expanders, which enable, alternatively, its simple opening with easy access to the cargo area or opening it with the cargo area enhanced.

It is a second object of the present invention a tailgate for cargo vehicles, the type with two individual panels, from which protrude, when necessary, a couple of extenders to enhance the cargo area, said extenders providing a support or secure and efficient holder for the extended cargo area.

### Summary of the Invention

These and other objects are achieved thanks to a tailgate with extender for automotive vehicle cargo area, wherein the tailgate is divided into two doors, such as doors with stops, which are attached to the vehicle side part, being their hinges fixed on sides and their pivoting axes are vertical. The opening of the tailgates is made through external knobs and their retention is made through mechanical / electrical locks. When the two doors are open, the cargo space can be enhanced by extenders that go out from these tailgates, extending the cargo space and enhancing it in order to transport larger cargos. The extenders are opened by the tailgates internal handles and are joined each other through a plug-in device; the hinges of the extenders are fixed on the tailgates, i.e., two by tailgate. The extenders are supported on the rear bumper, so that there is better distribution of cargo. There is the possibility of using a horizontal bar which engages the tailgates and contributes structurally.

In addition to the above described, in order the solution can be used in our roads according to the current legislation, it is provided a license plate which is articulated and moves out from inside the tailgate and there is a prearrangement to engage a safety net for retention loads with the space extended. There are also auxiliary lights which are articulated and also move out from inside of the tailgates. The energy feed of the License plate light as well as of the auxiliary lights is supplied by wire harness with doors-off.

In other words, the present invention relates to an automotive vehicle provided with a tailgate with cargo area extender for an automotive vehicle such as SUVs, trucks, pick-up trucks and similar, whose cargo area is defined by a floor delimited by side parts and by a tailgate. Said tailgate comprises two panels, each one pivoting with respect to a vertical axis defined by one or more hinges connecting, in an articulated manner, one side of the vehicle body to said panel. Each one of said panels has an extender, articulated in relation to said panel by means of at least one hinge, with horizontal articulation axis, said panels, when downward swung or tilted, defining an extended cargo area and, basically, coplanar with the floor of the freight vehicle cargo area.

Moreover, one of said panels has an external surface complementary to the vehicle body and fixed in a frame having a centrally hollow quadrangle shape and defined by edges joined each other by their vertices, the opposite surface with respect to the external surface being defined by an extender, which is inferiorly articulated with respect to the frame by means of the hinges. Each one of said panel is articulated by means of at least one hinge with respect to the body side of said vehicle, said at least one hinge being fixed in a respective vertical column provided at the rear end of each body side. Furthermore, one of said extenders comprises a lock in an upper edge in relation the closed position of said extender, said lock protruding a bolt beyond the volume defined by the extender and able to penetrate into a corresponding hole on the complementary extender, so as to mechanically join the extender, in relation to its complementary, in the open position of said extenders.

Therefore, each extender is maintained in the open loading position, supported by said at least one joint and by the bumper upper surface. Alternatively, the extenders are further supported by a U-shaped bar and mechanically connecting one of the rear lower vertices of each panel with its opposite vertex.

### Brief Description of the Figures

The object of the present invention will be better understood from the below detailed description, according to a preferred non-limiting illustrative embodiment, which is made in relation to the accompanying drawings, in which:
- Figure 1 is a rear perspective view of a light truck type vehicle provided with a tailgate according to the invention, in closed position;
- Figure 2 is a rear perspective view of the vehicle of figure 1, with the doors open;
- Figure 3 is a perspective view of the right tailgate illustrating the beginning of the extender downward swinging;
- Figure 4 is a rear perspective view of the vehicle of Figure 1 with the extender complete assembled;
- Figures 5A and 5B are elevation rear views illustrating only the tailgates and extenders, in the assembled position, respectively with and without supporting bar;

Figures 6A and 6B are views in longitudinal section of the vehicle rear of Figure 1, illustrating the single and double support, respectively with and without the supporting bar, for an extender in mounted position; and
- Figures 7A and 7B correspond to rear elevation views illustrating the interlocking between the two extenders in the assembled position.

### Description of a preferred embodiment of the invention

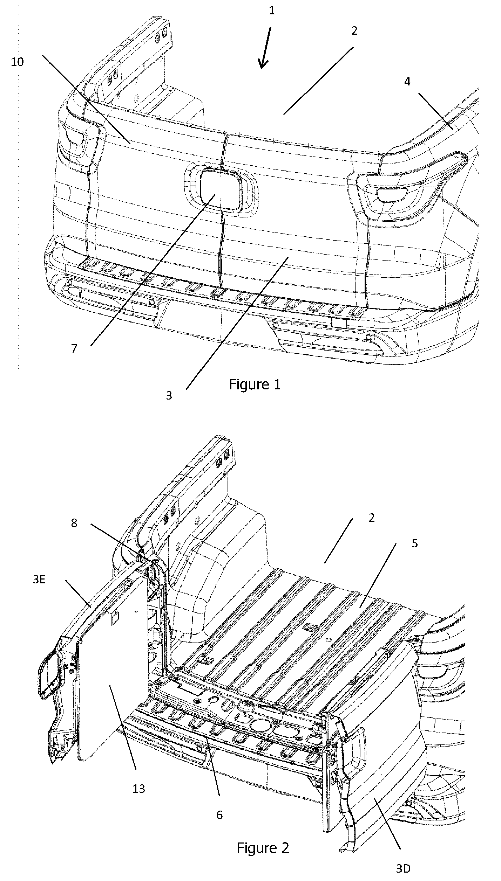

According to the above Figures, with (1) is generally illustrated an automotive vehicle such as light truck (partially shown in Figures 1, 2 and 4), defined by a motor compartment (not shown), a passenger compartment (not shown), which can comprise seats for two or four passengers and a cargo area or space (2). Said cargo area (2) is frontwards bounded and defined by the wall that separates the cargo area (2) from the passenger compartment, laterally bounded and defined by the vehicle body, in particular the vehicle side part (4), bounded and defined at the bottom by the floor (5) and bounded and defined at the rear by a tailgate (3), whose opening gives access to said cargo area (2).

Despite the present description is made in regard to a light truck type vehicle, it should be noted that the solution of the present invention is not limited to this kind of vehicle and may also be applied to commercial or cargo vehicles or similar, such as SUVs, trucks, pick-up trucks, and the like.

In the closed position, the tailgate (3) defines a continuous surface in relation to the side part (4) of the vehicle body (1) and it is positioned so that its lower share is higher than the maximum height of the rear bumper (6). Said tailgate (3) (see Figure 2) is a tilting door type, and comprises two individual panels, a left panel (3E) and a right panel (3D), which are kept in the closed position by means of a lock (not shown) actuated by the handle (7). Indistinctly, said lock can be either an electric lock or a mechanical lock, and the latter may also comprise a drum (actuated by key) so as to prevent undue door (3) opening.

More particularly, each one of the tailgate (3) panels (3E, 3D) is fixed to the vehicle body, in particular in the related rear column (8) of the side part (4) by means of related hinges (9), so as to allow tilting or opening each panel (3E, 3D) individually.

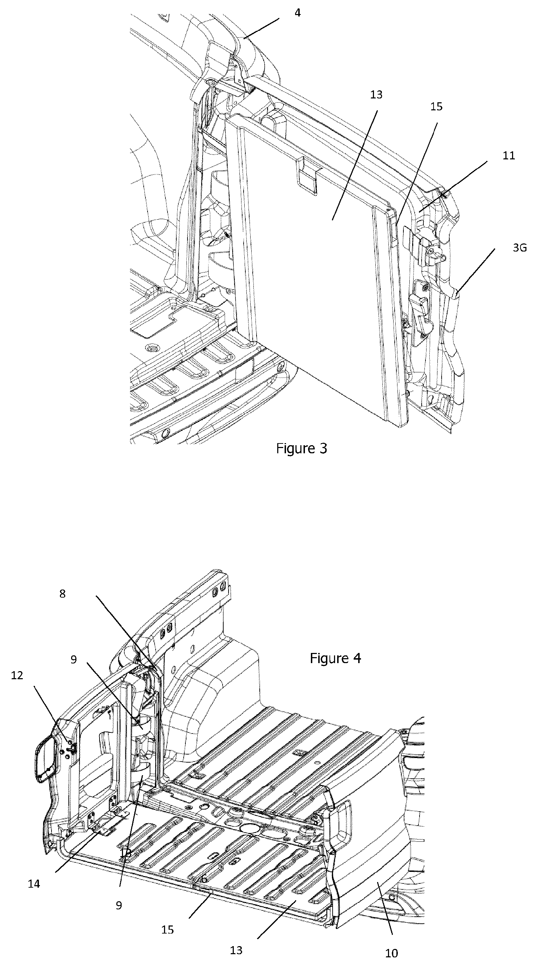

Structurally, each panel (3E, 3D) has an outer surface (10) whose conformation is designed to maintain the aesthetic continuity of the side part (4) of the vehicle body. Said outer surface (10) is fixed on a frame (11) (see in particular Figure 4A), which structurally defines each one of the tailgate (3) panels (3E, 3D), and wherein said hinges (9) are fixed on the frame connecting each one of said panels (3E, 3D) to the rear columns (8), in a tilting way. For this purpose, each said frame (11) has a centrally hollow quadrangle shape and it is defined by edges (12) joined each other by its related vertices. It is clear for an expert on the matter that each frame (11) shape is a function of each panels (3e, 3d) size and, therefore, of the tailgate (3) overall size. In turn, the tailgate (3) overall size is a function of the vehicle (1) overall size. Similarly, the structural hardness of each one of the frames (11) and, therefore, the size and material used in the manufacture of each of the edges (12), is a function of the cargo that can be supported by each panel (3E, 3D).

Moreover, each frame (11), inside it, comprises an extender (13) in the form of a thick quadrangular surface. Each extender (13) is fixed to the respective frame (11) by means of hinges (14) disposed between the frame (11) bottom edge (12) and the extender (13) bottom side. Similarly, the structural hardness of each extender (13) as well as the size and number of hinges (14) are a function of the expected cargo capacity to be supported by the tailgate (3) and, therefore, this can be easily ascertained by any expert on the art.

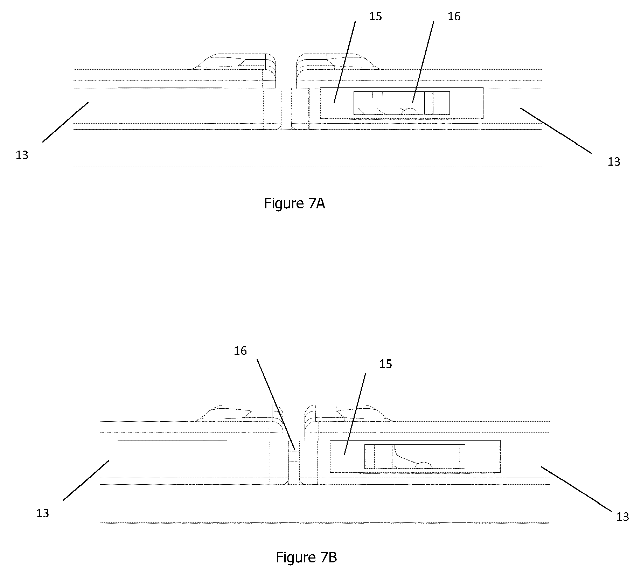

Finally, Figures 7A and 7B illustrate a detail of the extender (13), each panel (3E, 3D), in lying position, that is, in use position. In this position, upper region of each extender (13) are arranged facing each other. Indistinctly, in one of the extenders is provided a lock (15) comprising a sliding bolt (16) which, in the distended position, penetrates into a hole (not shown) disposed on the complementary extender.

The object of the present invention will be better understood from the following description related to the tailgate opening and, consequently, forming the enlargement of the vehicle (1) cargo area (2). The sequence of its opening is illustrated in Figure 1 (door (3) fully closed), figure 2, figure 3 and figure 4 (door open and extended and locked extenders).

Thus, starting from the vehicle with its tailgate (3) in closed position, the two panels (3E, 3D), which define the tailgate (3), are connected each other and/or connected to the vehicle body (1) by means of a respective lock (not shown). For the principles of the present invention, it is absolutely indifferent the locking kind of each panel (3E, 3D), which can be an interlock between each panel or a lock of each panel (3E, 3D) directly to the fixed structure of the vehicle body. In any event and in the preferred embodiment illustrated, the tailgate is unlocks by the tailgate handle (7) arranged in order to overlap each one of the panels (3E, 3D). Consequently, by acting on the knob (7) the tailgate (3) is unlocked allowing each panel (3E, 3D) to tilt or extend up to the position of maximum opening shown in Figure 2, that is, each panel (3E, 3D) 90° in respect to its related closed position. The panel (3E, 3D) tilting occurs because of the vertical axis hinges (9).

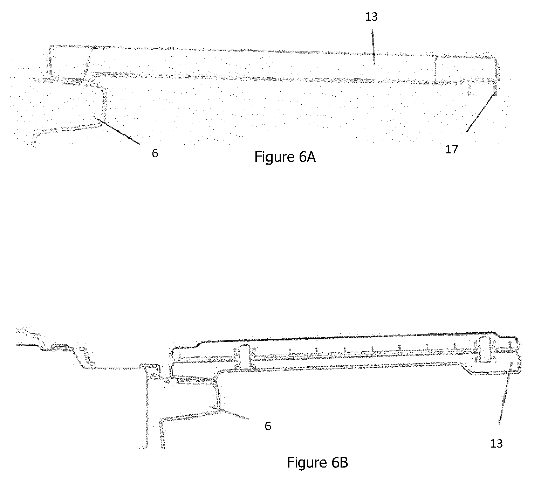

When the panels are open (3E, 3D), it is possible to perform the downward swinging of the respective extenders (13) from the vertical position to a horizontal position (see Figure 4), around the horizontal axis which is defined by hinges (14). With this movement, each extender (13) assumes its final use position, defining a continuous surface with the vehicle cargo area (2) floor (5). This final position is guaranteed and supported due to the fact that each extender (13) rests on the upper surface of the rear bumper (6) (see in particular Figure 6A). Lastly, in order to attach each one of the extenders with its complimentary, the last assembly step is performed locking the lock (15), visible and accessible in the upper surface defined by extenders (13), whereby the bolt (16) is protruded from the lock (15), provided on one of the extenders, into a corresponding complementary extender hole (not shown). In this position, the vehicle is ready to receive a "long" cargo, which will be duly loaded in its extended cargo area (2).

In order to close the tailgate (3), the above mentioned four steps are carried out in reverse order, i.e., the lock (15) opening, the extenders upward swinging, the panels (3E, 3D) closure and the tailgate locking through the rear door lock.

In an alternative embodiment of the present invention, and considering a particular expected arrangement of heavy cargo in the vehicle (1) cargo area (2), it is possible increase the extenders (13) weight-bearing capacity adding a complementary support bar (17).

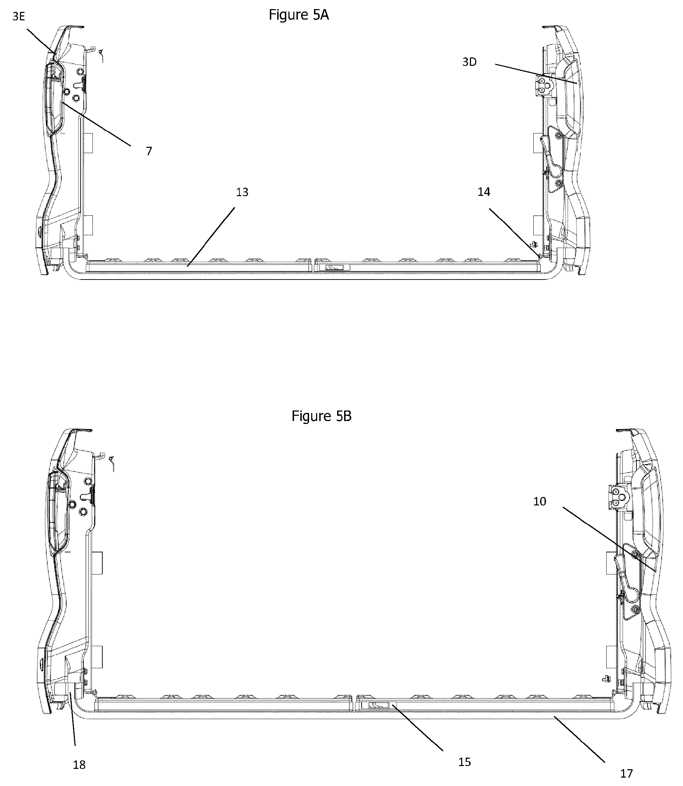

In particular, with special attention to figures 5B and 6B, each of the panels (3E, 3D) is bound to its complementary panel through a U-shaped bar (17), which connects the rear bottom vertices of each panel (3e, 3d), so as to provide an additional support surface for the extender (13). In more detail way, each bar (17) end (18) has a related pin provided with a head (not shown) and protruding outside. Each one of these pins is intended to penetrate in a respective drop-shaped opening (not shown in the figures), arranged in related rear bottom edges in relation to the open door position (3). Therefore, by using the bar (17), each one of the extenders (13), in the open position, is supported by both the fender (6) and the bar (17), thereby increasing its cargo-bearing capacity.

As can be realized from the above description, the solution herein proposed allows a substantial increase of the cargo area (2) of a vehicle (1) such as light *truck* or *pick-up truck.* The proposed way of opening the tailgate (3) makes easy the access to said cargo area (in comparison to the one-piece rear tailgates of horizontal tinting), as well as facilitates the extender (13) mounting. In addition, despite the tests have demonstrated that a single extender support (on the bumper (6)) is sufficient for this light vehicle category cargo capacity, it is always possible to increase the supporting capacity of the cargo area extending by means of a bar (17), for example, for medium or higher freight vehicles.

## Claims

1. Tailgate with cargo area extender for cargo automotive vehicle, such as SUVs, trucks, pick-up trucks and the like, whose cargo area (2) is defined by a floor (5) delimited by the side parts (4) and a rear door, **characterized by** the fact that said tailgate (3) comprises two panels (3D, 3E), each panel tilting with respect to a vertical axis defined by one or more hinges (9), which connect, in an articulated manner, one vehicle body (1) side part (4) to said panel (3D 3E), and wherein each one of said panels (3D, 3E) has an extender (13) hinged in relation to said panel (3D, 3E) by means of at least one hinge (14), with horizontal articulation axis, said panels (3D, 3E) when tilted or downward swung, defining an extended cargo area essentially coplanar with the cargo area (2) floor (5) of the cargo vehicle (1).

2. Tailgate according to claim 1, **characterized by** the fact that each one of said panels (3D, 3E) has an outer surface (10), complementary to the vehicle body and fixed in a frame (11), having centrally hollow quadrangle shape and defined by edges (12) joined each other by respective vertices, the opposite surface in relation to the outer surface (10) being defined by an extender (13), articulated in the bottom, with respect to the frame (11), by means of hinges (14).

3. Tailgate according to claim 1, **characterized by** the fact that each of said panels (3D, 3E) is articulated by means of at least one hinge (9), with respect to said vehicle body side part (4), said at least one hinge (9) being fixed to a related vertical column (8) provided at the rear end of each vehicle body side part (4).

4. Tailgate according to claim 1, **characterized by** the fact that one of said extenders (13) comprises a lock (15) in one of its upper edges, with respect to said extender closed position, said lock (15) protruding a bolt (16) beyond the volume defined by the extender (13) and able to penetrate into a corresponding hole provided in the complementary extender (13) in order to mechanically join an extender to its complementary, in the open position of said extenders.

5. Tailgate according to any one of claims 1 to 4, **characterized by** the fact that each extender is supported in the open loading position by said at least one hinge (14) and by the bumper (6) upper surface.

6. Tailgate according to claim 5, **characterized by** the fact that extenders (13) are further supported by a U-shaped bar (17), mechanically interconnecting one of the rear bottom vertices of each panels (3D, 3E) to the opposite vertex.

7. Automotive vehicle (1), such as SUVs, trucks, pick-up truck and the like, **characterized by** the fact that it comprises a tailgate (3) to access to the cargo area (2) as defined in claims 1 to 6.
